# EUROPEAN PATENT APPLICATION

(11) **EP 1 434 357 A2**
(43) Date of publication of application: **30.06.2004**
(21) Application number: 03027805.5
(22) Date of filing: 03.12.2003
(51) Int. Cl.: H04B 1/16, H04L 12/28

(54) **Power saving method for an electronic device**

(30) Priority: 26.12.2002 JP 2002377168
(71) Applicant: Kabushiki Kaisha Toshiba, Tokyo (JP)
(72) Inventor: Matsumura, Masafumi, Toshiba Corporation, Tokyo 105-8001 (JP)
(74) Representative: Henkel, Feiler & Hänzel

(57) **Abstract**

This invention relates to an electronic device including a unit (10) which receives a wakeup request for the electronic device in a suspended state, and a frame containing information representing a transmission source device, and a unit (10) which determines whether or not to permit wakeup of the electronic device on the basis of the transmission source information contained in the received frame.

## Description

The present invention relates to an electronic device and a power control method in the electronic device and, more particularly, to a wireless communication apparatus which can resume operations from a suspended state in response to a wakeup request from another apparatus, and a power control method therefor.

Conventionally when an electronic device in the suspended state receives a wakeup request from an unspecified external device, the electronic device is activated regardless of whether the wakeup request from the external device is the one desired by the user (Jpn. Pat. Appln. KOKAI Publication No. 2002-132393).

If the electronic device in the suspended state is activated by a wakeup request from an unspecified external device, as described above, unnecessary activation wastes power consumption.

According to an embodiment of the present invention, there is provided an electronic device comprising means for receiving a wakeup request for the electronic device in a suspended state, and a frame containing information representing a transmission source device, and means for determining wakeup of the electronic device on the basis of the transmission source information contained in the received frame.

According to the embodiment of the present invention, there is provided a power control method in an electronic device which further comprises steps of outputting an inquiry signal, collecting frames which are transmitted in response to the inquiry signal and contain pieces of information representing a plurality of transmission source devices, registering, as first information in a table, information representing a predetermined type of device out of the pieces of information which are contained in the collected frames and represent the transmission source devices, and registering, in the table in association with the first information, second information representing that connection has been established for the predetermined type of device represented by the first information, and in which the decision is made by looking up the table.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing the arrangement of a wireless communication apparatus according to an embodiment of the present invention;
FIG. 2 is a view showing the state transition of a communication terminal;
FIG. 3 is a flow chart for explaining the operation of a power controller according to the embodiment of the present invention;
FIG. 4 is a flow chart for explaining the operation of an HID packet recognition unit;
FIG. 5 is a flow chart for explaining the operation of the HID packet recognition unit;
FIG. 6 is a table showing a table managed by the HID packet recognition unit;
FIG. 7 is a timing chart for explaining a data flow between a wireless communication terminal, a wireless module, and a wireless input device; and
FIG. 8 is a view showing an FHS payload format.

A wireless communication apparatus according to a preferred embodiment of the present invention will be described in detail below with reference to the several views of the accompanying drawing.

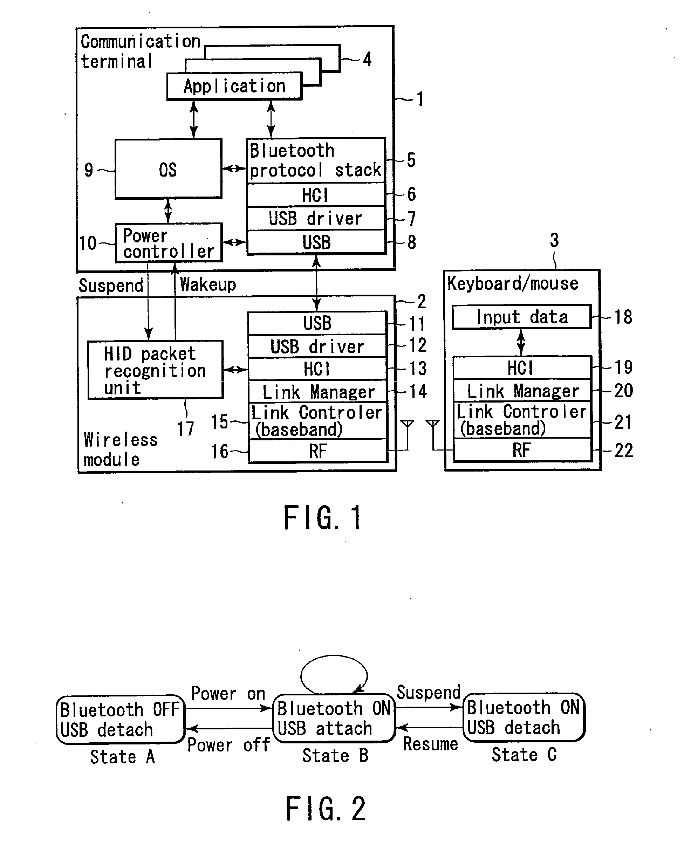

FIG. 1 is a block diagram showing the arrangement of the wireless communication apparatus according to the embodiment of the present invention.

As shown in FIG. 1, a communication terminal 1 and wireless module 2 are connected via a USB (Universal Serial Bus). The communication terminal 1 wirelessly communicates with a wireless input device 3 such as a keyboard or mouse via the wireless module 2.

In FIG. 1, reference numeral 4 denotes an application program which runs on an OS (Operating System) 9, and if necessary, outputs a suspend request or wakeup request.

A Bluetooth protocol stack 5 is a group of Bluetooth protocol drivers.

An HCI (Host Control Interface) 6 is an interface which executes processing in accordance with a Bluetooth protocol request.

A USB driver 7 controls a USB interface 8.

The OS 9 is the OS of the communication terminal 1, and the application program 4 is executed on the OS 9.

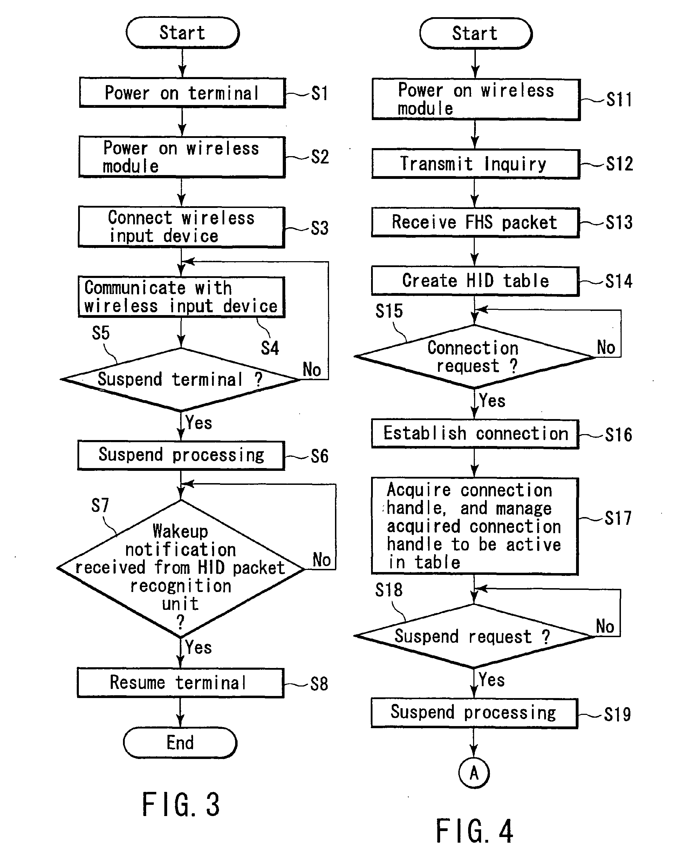

A power controller 10 controls the power of the communication terminal 1, controls the power of the wireless module 2, and performs processing shown in FIG. 3.

A USB driver 12 controls a USB interface 11.

An HCI 13 manages a link manager 14 of the wireless module 2.

The link manager 14 is a protocol for establishing Bluetooth communication, and instructs a link controller (baseband layer) 15 to set a communication link and various communication parameters regarding the link.

The link controller 15 is a Bluetooth baseband, and is a protocol which interfaces actual transmission/reception data packets with a physical layer.

An RF 16 is a wireless communication I/F(interface) which modulates/demodulates a signal input/output to/from an antenna and outputs the resultant signal to the antenna or the link controller 15 serving as a baseband.

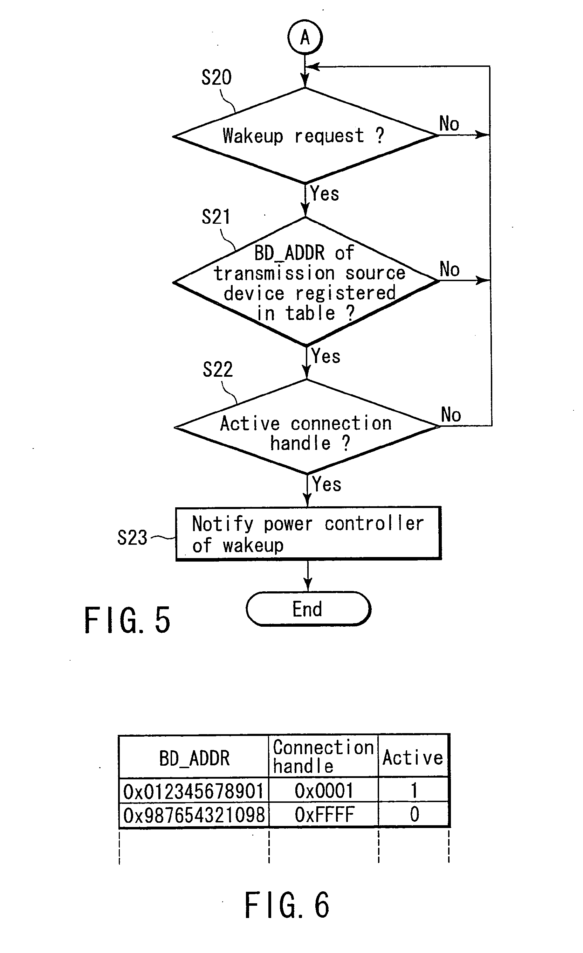

An HID (Human Interface Device) packet recognition unit 17 realizes processing according to the embodiment of the present invention. The HID packet recognition unit 17 performs processes shown in FIGS. 4 and 5, and saves and manages a table shown in FIG. 6.

Reference numeral 18 denotes data input from the input device such as a keyboard or mouse. An HCI 19 manages a link manager 20 of the input device 3.

The link manager 20 is a protocol for establishing Bluetooth communication, and instructs a link controller (baseband layer) 21 to set a communication link and various communication parameters regarding the link.

The link controller 21 is a Bluetooth baseband, and is a protocol which interfaces actual transmission/reception data packets with a physical layer.

An RF 22 is a wireless communication I/F which modulates/demodulates a signal input/output to/from an antenna and outputs the resultant signal to the antenna or the link controller 21 serving as a baseband.

FIG. 2 is a view showing the state transition of the communication terminal.

Before power-on, the communication terminal 1 is in state A. That is, the Bluetooth function is OFF, and the USB is electronically disconnected or disabled. After power-on, the power controller 10 powers on the wireless module 2, connects the USB 8, and changes to state B. In state B, the Bluetooth function is ON, and the USB is attached.

When the communication terminal 1 suspends operation in a power-saving mode in response to an instruction from the user or the OS 9, the communication terminal 1 changes to state C, and notifies the HID packet recognition unit 17 of a message to that effect. In state C, the Bluetooth function is ON, and the USB is disconnected or disabled. At this time, the communication terminal 1 waits for a wakeup request from the HID packet recognition unit 17. The HID packet recognition unit 17 recognizes a packet transmitted from the wireless input device 3, and notifies the power controller 10 of the wakeup request.

The power controller 10 resumes operation of the communication terminal 1 in response to notification of the wakeup request from the HID packet recognition unit 17. The communication terminal 1 then changes from state C to state B. If the OS 9 or the like designates power-off, the communication terminal 1 changes from state B to state A.

The operation of the power controller 10 according to the embodiment of the present invention will be explained with reference to the flow chart of FIG. 3.

If the communication terminal 1 is powered on (S1), the power controller 10 designates a power-on operation of the wireless module 2 (S2), establishes connection to the wireless input device 3 (S3), and performs communication with the wireless input device (S4).

The power controller 10 determines whether the OS 9 or the like has output a suspend request for the communication terminal 1 (S5). If YES in S5, the power controller 10 performs a suspend processing operation (S6); if NO, operation continues processing in S4.

In S6, the power controller 10 performs suspend processing and suspends operation of the communication terminal 1which corresponds to state B in FIG. 2. The power controller 10 determines whether it has received a wakeup notification from the HID packet recognition unit 17 (S7). If YES in S7, the power controller 10 resumes operation of the communication terminal 1 (S8).

That is, if the power controller 10 receives a wakeup notification from the HID packet recognition unit 17 while the communication terminal 1 is in the suspended state, the power controller 10 resumes operation of the communication terminal 1.

The operation of the HID packet recognition unit 17 will be explained with reference to the flow charts of FIGS. 4 and 5.

After the wireless module 2 is powered on (S11), the HID packet recognition unit 17 executes an inquiry in order to detect an HID (Human Interface Device) class device (S12).

If a wireless device (such as device 3) exists within a communicable range, each device sends back an FHS (Frequency Hop Synchronization) packet. The wireless module 2 receives the FHS packet (S13), and each device extracts only HID class BD_ADDR (Bluetooth Device Address) from the received FHS packet and creates a table. FIG. 6 shows an example of the table. As shown in FIG. 6, this table stores BD_ADDR representing the address of a Bluetooth device, a connection handle, and an active flag representing whether connection has been established. In S14,the BD_ADDR is stored in the table of FIG. 6.

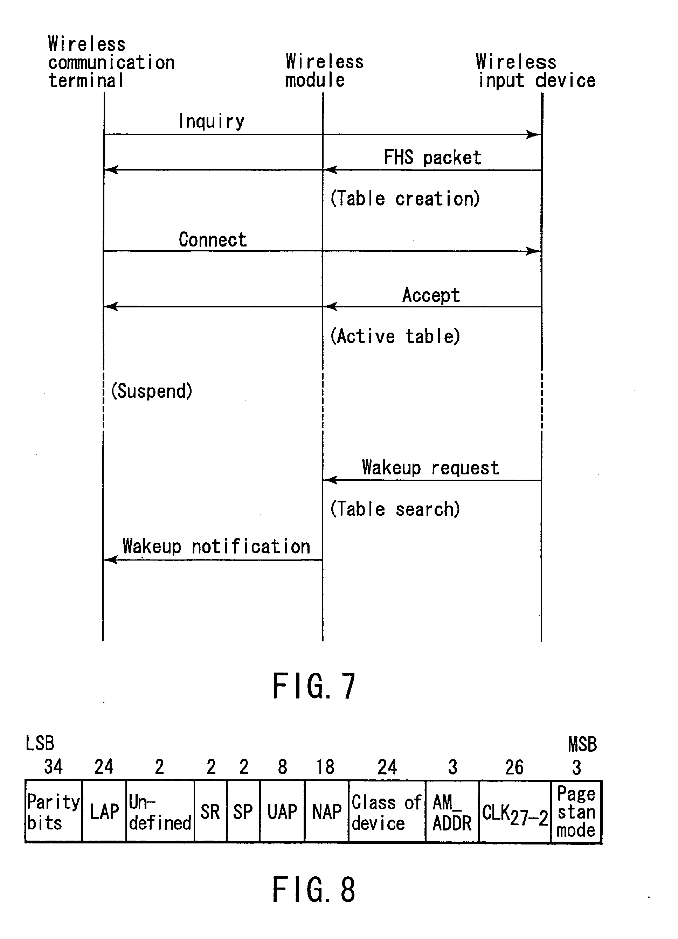

FIG. 8 is a view showing an FHS payload format. Of an FHS packet field, only fields pertaining to the embodiments of the present invention will be described, and a description of the remaining fields will be omitted. Each field of the FHS packet is described in "Bluetooth specification".

In FIG. 8, an "LAP" field has 24'bits, and stores information at the lower address portion of a unit which transmits an FHS packet. A "UAP" field has eight bits, and stores information at the upper address portion of the unit which transmits an FHS packet. That is, BD_ADDR can be acquired by referring to the "LAP" field and "UAP" field.

A device class (Class of device) field has 24 bits, and stores information representing the device class of the unit which transmits an FHS packet. That is, whether the device is an HID can be determined by referring to the device class field.

Returning to FIG. 4, after step S14, the HID packet recognition unit 17 determines whether it has received a connection request from the OS 9 or the like (S15). If YES in S15, the HID packet recognition unit 17 performs connection processing and establishes a connection (S16) between the communication terminal 1 and the wireless input device of interest (e.g., device 3). The HID packet recognition unit 17 acquires a connection handle, stores it in the table, and manages the acquired connection handle to be active in the table (S17). As for an HID with which no connection is established, a connection handle is managed as inactive.

After table management processing in S17, the HID packet recognition unit 17 determines whether it has received a suspend request from the power controller (S18). If YES in S18, the HID packet recognition unit 17 performs suspend processing (S19) to suspend operation of the communication terminal 1 and wireless module 2.

The HID packet recognition unit 17 determines whether it has received a wakeup request from the wireless input device 3 in the suspended state (S20 - FIG. 5). If YES in S20, the HID packet recognition unit 17 determines whether BD_ADDR of the transmission source device that is contained in the wakeup request has been registered in the table (S21). If NO in S21, the HID packet recognition unit 17 returns to processing in S20 to ignore the wakeup request.

If YES in S21, the HID packet recognition unit 17 determines whether an active flag corresponding to the BD_ADDR and connection handle of the device which has output the wakeup request is active (S22).

If NO in S22, the HID packet recognition unit 17 returns to processing in S20. That is, the HID packet recognition unit 17 ignores a wakeup request output from an HID class device which has been registered in the table but exhibits an "inactive" active flag.

If YES in S22, the HID packet recognition unit 17 notifies the power controller 10 of the wakeup request (S23), and ends processing. In response to this, the power controller 10 resumes operation of the communication terminal 1.

Thus, the active flag serves as an indication to the HID packet recognition unit 17 of whether or not to wakeup or resume operation of the communication terminal 1 from the standby mode. The wakeup request is only honored from active wireless input devices (devices that are "connected" in step S16 of FIG. 4) which have been registered in the table (i.e., handle is stored in the table).

FIG. 7 is a timing chart for explaining a data flow between the wireless communication terminal 1, the wireless module 2, and the wireless input device 3.

Note that the communication terminal 1 and wireless module 2 are connected via the USB in FIG. 1, but the wireless module 2 may be assembled in the communication terminal 1.

In the wireless communication apparatus according to the embodiment of the present invention, a table representing a device which can issue a wakeup request is created in advance. When an unspecified device issues a wakeup request, whether or not wakeup is perform is determined by looking up the data in the table. Resumption of operations based on a wakeup request from an unspecified device can be prevented, and thus an increase in power consumption by unnecessary activation can be prevented.

The present invention is not limited to the above-described embodiment, and can be variously modified without departing from the spirit and scope of the invention in practical use.

## Claims

1. An electronic device **characterized by** comprising:
means (10) for receiving a wakeup request for the electronic device in a suspended state, and a frame containing information representing a transmission source device as transmission source information; and
means (10) for conditioning resumption of operation of the electronic device on the basis of the wakeup request and the transmission source information contained in the received frame.

2. The device according to claim 1, which further comprises a table in which first information representing a predetermined type of device and second information representing whether to resume operation of the electronic device in response to the wakeup request from the device represented by the first information are stored in association with each other, and in which the conditioning means accesses said table and permits resumption of operation of the electronic device when the information representing the transmission source is registered as the first information in the table and the second information associated with the information representing the transmission source indicates resumption of operation is permitted in response to the wakeup request.

3. The device according to claim 2, **characterized in that** the table registers only information representing a predetermined type of device as the first information, out of pieces of information which represent transmission source devices and are contained in frames that are collected in response to an inquiry signal and represent a plurality of transmission source devices.

4. The device according to claim 2, **characterized in that** the second information permits a wakeup request from a device which has established connection to the electronic device to effect resumption of operations of the electronic device.

5. The device according to claim 2, **characterized in that** the predetermined type of device includes a human interface device.

6. The device according to claim 1, **characterized in that** the receiving means and the determining means are arranged in a wireless module.

7. The device according to claim 1, **characterized by** further comprising means for resuming the electronic device when wakeup of the electronic device is determined.

8. The device according to claim 1, **characterized in that** the electronic device includes a wireless communication device.
